Europäisches Patentamt

European Patent Office

Office européen des brevets

(11) Publication number: **0 242 363 B1**

(12) **EUROPEAN PATENT SPECIFICATION**

(45) Date of publication of patent specification: **09.09.92** (51) Int. Cl.⁵: **G01M 3/22**

(21) Application number: **86900336.8**

(22) Date of filing: **16.12.85**

(86) International application number:
**PCT/SE85/00526**

(87) International publication number:
**WO 86/03836 (03.07.86 86/14)**

(54) **METHOD FOR LEAK DETECTION IN A PIPELINE SYSTEM.**

(30) Priority: **18.12.84 SE 8406449**

(43) Date of publication of application:
**28.10.87 Bulletin 87/44**

(45) Publication of the grant of the patent:
**09.09.92 Bulletin 92/37**

(84) Designated Contracting States:
**AT BE CH DE FR GB IT LI LU NL**

(56) References cited:
**US-A- 1 693 737**
**US-A- 4 328 700**

(73) Proprietor: **GEOSIGMA AB**
**Box 894**
**S-751 08 Uppsala(SE)**

(72) Inventor: **KLOCKARS, Carl-Erik**
**Skogsbergsv. 6**
**S-752 40 Uppsala(SE)**

(74) Representative: **Bjellman, Lennart Olov Henrik et al**
**DR. LUDWIG BRANN PATENTBYRA AB Drottninggatan 7 Box 1344**
**S-751 43 Uppsala(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention concerns a method for leak detection in pipeline systems preferably in a water supply and sewer system, in the following called the line networks.

It is of economic importance that the water supply and sewerage in a society is continuously restored and maintained. Besides the fact that costs for the renewal of sections of the pipelines, and for repair of broken pipe segments, are high, there is another problem that can bring about large expenses, namely dilution of the waste water through in-leakage into the waste water pipe from the surface water pipe in the line system, or the in-leakage of other irrelevant water, for instance ground water or pure water. Due to this dilution the capacity load at the sewage treatment plant will be heavier, since the volume of incoming water to be purified increases, which leads to a more costly operation.

Another factor of importance from an environmental viewpoint is if the surface water, which normally is let out into a recipient without being purified, is blended with the waste water, which means an undesirable load on the environment.

In order to be able to carry out measures for the restoration and management of the water supply and sewer systems for the purpose of preventing or eliminating the above problems or the like, good knowledge is required about the condition of the line network. Such a study should be implemented at several sub levels. At the first level the line network is classified into "malfunctioning" and "functioning" parts. This analysis will bring about a composite picture of present damages in the network. Areas, which are considered in need of further examination and analysis, are selected so that, at a second sub level, the bad pipeline sections can be narrowed down block by block. Finally, at a third sub level, the scanning is specified down to the measurement of meters, whereby the size and range of the damage is exactly determined.

Examinations of this kind has so far been carried out by means of TV technique. A TV camera has been lowered down into the pipes of the network for the direct observation of possible leaks. By this method, however, one can establish only larger leaks where the water flow in, more definably at one point. It has not been possible to exactly locate minor leaks through which the water trickles. An additional drawback with this technique is that a normal operation of the line network not is possible during the search. In some cases for instance, the pipe that is to be tested has to be closed off, or the fluid of the pipe has to be led past the length of pipe that is to be scrutinized.

It is previously known how to perform a leak detection of individual pipes of different types, for instance water or gas pipes, by the admission of radioactive tracers (DE-A-1 279 382), by the admission of substances which at a leak react with air and render a visible reaction product (published patent application SE-7 203 486-1), by the admission of substances that can be detected by an infrared detector (ibid), or by the admission of freon (published patent application SE-7 613 291-9) that can be detected by a leak detector of a prior art construction.

From US-A-1 693 737 it is previously known a method of locating a point of escape of liquid from a concealed pipe including use of dye as a tracer. This method involves a preventing of free and unknown flow in the pipe to be examined, which means that normal use of the pipe is impossible during the time of the examination, simultaneously as the examination is restricted to water mains.

US-A-4 328 700 discloses a method for detecting leaks in fluid processing system using sulfar hexafluoride as a tracer during operation of the system. Leakage at a partition separating two flow paths is detected as the presence of tracer, introduced in a pulsed amount upstream of the partition in the first flow path, at a sampling point downstream of the partition in the second flow path, at a time estimated for the tracer to flow from the point of introduction to the sampling point via a possible leak in the partition.

The idea of the present invention is, by supplying different tracers into each pipe of the line network and by determining the concentrations of these tracers at points downstream, to estimate the inflow of irrelevant water, and the interaction between the pipes, that is, the water inflow into respective pipe from the other pipes due to a leakage.

Since this interaction can be determined, it is possible, contrary to previous technique, to establish also a leakage from a pipe. Thereby an additional estimate of the size of the leak is obtained, since the concentration of tracers is related to the flow through the leak.

One object of the method according to the invention is to make it possible to determine or estimate the amount of irrelevant inflow into the pipes of the line network, and to allow the determination of the interaction between the pipes in the line network, that is, leakage from one pipe to another. Irrelevant inflow is here understood for instance as the inflow of pure water or ground water. A further object is to allow an examination of the line network without the interruption or disturbance of the normal operation.

In the following the invention will be more closely clarified by means of an example in the form of a leak search in a line network. For a person skilled in the art it is however evident that the invention is applicable also to other types of pipeline systems. This example of an embodiment is not meant to confine the invention.

The method according to the invention is carried out at three levels. The object of the method of the first level is a rough mapping of which areas within the network require a closer analysis. Thus, peripherally in the line network the surface water pipe is supplied with a large constant amount of water per unit time. This is meant to correspond to an occasion when the filling degree is high in the surface water pipe, as it would be, for example after a downpour. At suitable wells downstream, the surface water pipe and waste water pipe are supplied with different leakage indicating means either during a longer period of time, with the concentration and flow being constant, or in batches. This supply is activated by an automatic and adjustable dosing feeder, preferably a dosage pump.

The leakage indicating means comprises tracers which have to be what is called water true. This means that the substances are not allowed to be adsorbed on the walls of the pipes, neither bonded to those materials or substances that are dissolved or suspended in the water, streaming through the pipes. Of course, the substances being part of the leakage indicating means must not, by being corrosive, affect the line system. On selecting substances one should also take into consideration various environmental aspects, such as the effect on sensitive recipients such as lakes, creeks and other water ways, as well as the biological step in water purifying plants, where the active micro organisms can be inactivated by toxic substances.

After the admission of tracers the system is allowed to achieve the balance, so that the concentrations of the tracers are no longer being altered by the time factor. When equilibrium is attained samples are taken in a well downstream, adjacent to the outlet of a larger collecting pipe. These samples undergo a chemical and/or physical analysis for determining the concentrations of respective tracers. Samples are taken at different points corresponding to occasions with a low and high production, respectively, of waste water. The sampling can be carried out by means of any known sampler, or by simply lowering the cord of a sample bottle into the well, whereby the bottle is filled up and then hoisted.

At the second level, on one hand one determines the interaction between the waste water and surface water pipe, in sections between consecutive wells, and on the other hand the inflow is estimated regarding irrelevant water (pure water, ground water) flowing to the waste water pipe between consecutive wells. This is in principle being carried out as at the first level, that is, periferally in the line network, the surface water pipe is supplied with a large constant amount of water per unit time, which intendedly corresponds to an occasion when the filling degree is high in the surface water pipe, as for example after a downpour. Leakage indicating means is supplied to the surface water pipe and waste water pipe at suitable wells downstream relative to the wells where the water was supplied, during a longer period of time and with constancy in concentration and flow. This supply occurs automatically by means of an adjustable dosing feeder, preferably a dosage pump. The leakage indicating means are the same as before. Samples are then taken in wells situated downstream, in the same way as at the first level, for determining the tracer concentration.

When calculating the flow in the pipes, the following relation is employed;

$$c_O \times q = c_1 \times Q,$$

where

$c_O$ = concentration of a supplied tracer
$q$ = flow of tracers
$c_1$ = concentration of a tracer at one sampling point
$Q$ = flow in the water waste pipe.

$c_O$ and $q$ are known, while $c_1$ is determined by an analysis and, thus, $Q$ can be calculated.

Setting off from the measured values, $Q$ can be calculated at the different points downstream of the line system, after which an estimation of the leakage and admixing of the surface water into the waste water pipe and vice versa, can be carried out. At the same time thorough flow determinations at the sampling points are obtained, for calculating the in-leakage of other irrelevant water (for instance pure and ground water) into the waste water pipe, between the sampling points. The calculation is done in such a way that for each part of the pipeline stretch, between two sampling points, the increase of waste water in the pipe is determined by ways of a difference calculation, setting the increase in relation to the number of working branches. The increase of flow per working branch calculated in this way is set in relation to the rest of the line system. Thereafter an estimation is made of the probability of irrelevant water in the wast water pipe for the concerned length of the pipeline.

At the third level a minute examination is performed of individual pipeline lengths in the size of meters, where a leakage has been established by means of the above methods.

The method is in principle the same as for level two, except for a difference in the sampling method. For an accurate determination of the occurrence of an in-leakage, samples are drawn in the pipe between two consecutive wells. The sampling is carried out in such a way that a wire is drawn between the wells. On the wire there is a hose attached, onto which a negative pressure pump is connected. The wire and the hose are provided with measurement markings, so that one can read at what distance from the well a sample is drawn. Thus, samples can be drawn, employing this method, at an optional point along the pipe between two wells.

## Claims

1. A method of leak detection in a pipeline network, in particular a water supply and sewage network, the method comprising
   a) adding a large constant amount of water per unit of time, to one of the pipes in the network at a first point in an area of the network to be examined;
   b) during a period of time adding a different leakage indicating agent to each of the pipes in the network, at a second point downstream with respect to said first point, the concentration and flow rate of said agents being kept constant;
   c) allowing the system to reach a steady state;
   d) taking samples in each pipe at points downstream from said second point for determining the concentration of leakage indicating agents, whereby the interaction between the pipes in the network is determined from the concentration in one pipe of leakage indicating agent from any other pipe.

2. The method as claimed in claim 1, further comprising drawing samples at several consecutive points downstream relative to said first and second points, for determining the concentration of said leakage indicating agents.

3. The method as claimed in claim 1 or 2, further comprising drawing a number of samples from a pipe between two adjacent sampling points in said pipe by means of a hose connected to a pump, said hose being moved through the pipe between said adjacent sampling points, the samples being taken at optional points in said pipe, said optional points being determined from measurement markings on the hose, or on a separate measuring tape.

4. The method as claimed in any preceding claim, wherein the added amount of water is excess in relation to the normal flow through the pipe.

## Patentansprüche

1. Verfahren zur Leckortung in einem Netzwerk von Rohrleitungen, insbesondere in Netzwerken der Wasserversorgung und der Abwasserentsorgung, **gekennzeichnet durch** die Verfahrensschritte:
   a) daß in eine der Rohrleitungen in dem Netzwerk eine große konstante Wassermenge pro Zeiteinheit an einer ersten Stelle in einem zu untersuchenden Bereich des Netzwerks hinzugegeben wird;
   b) daß während einer zeitlichen Periode in jede der Rohrleitungen in dem Netzwerk ein verschiedenes Leckanzeigemittel an einer zweiten Stelle stromabwärts in bezug auf die erste Stelle hinzugegeben wird, wobei die Konzentration und die Flußrate der Leckanzeigemittel konstant gehalten wird;
   c) daß dem System erlaubt wird, einen stationären Zustand zu erreichen;
   d) daß in jeder Rohrleitung an Stellen stromabwärts von dem zweiten Punkt Proben entnommen werden zur Bestimmung der Konzentration der Leckanzeigemittel, wobei die Wechselwirkung zwischen den Rohrleitungen in dem Netzwerk ermittelt wird aus der in einer Rohrleitung bestimmten Konzentration eines Leckanzeigemittels von irgendeiner anderen Rohrleitung.

2. Verfahren nach Anspruch 1, **gekennzeichnet durch** den weiteren Verfahrensschritt, daß Proben entnommen werden an verschiedenen aufeinanderfolgenden Stellen stromabwärts in bezug zu den ersten und zweiten Stellen, zur Bestimmung der Konzentration des Leckanzeigemittels.

3. Verfahren nach Anspruch 1 oder 2, **gekennzeichnet durch** den weiteren Verfahrensschritt, daß von einer Rohrleitung eine Anzahl von Proben entnommen wird zwischen zwei benachbarten Probenentnahmestellen in der Rohrleitung mit Hilfe eines Schlauchs, der mit einer Pumpe verbunden wird, wobei der Schlauch durch die Rohrleitung zwischen den benachbarten Probenentnahmestellen bewegt wird, und die Proben an gewünschten Stellen in der Rohrleitung entnommen werden, und die gewünschten Stellen durch Meßmarkierungen am Schlauch oder an einem separaten Meßband festgelegt werden.

4. Verfahren nach einem der vorhergehenden Ansprüche, **dadurch gekennzeichnet**, daß die hinzugegebene Wassermenge den normalen Fluß durch die Rohrleitung überschreitet.

**Revendications**

1.  Procédé pour détecter des fuites dans un réseau de canalisations, en particulier un réseau d'alimentation en eau et d'évacuation des eaux d'égouts, le procédé consistant à

    a) ajouter une importante quantité constante d'eau par unité de temps, à l'une des canalisations du réseau, en un premier point dans une zone du réseau devant être examinée;

    b) pendant un intervalle de temps, ajouter un agent indicateur de fuite, différent, dans chacune des canalisations du réseau, en un second point en aval dudit premier point, la concentration et le débit desdits agents étant maintenus constants;

    c) laisser le système atteindre un état stationnaire;

    d) prélever des échantillons dans chaque canalisation en des points situés en aval dudit second point pour déterminer la concentration d'agents indicateurs de fuites, l'interaction entre les canalisations du réseau étant déterminée à partir de la concentration, dans une canalisation, de l'agent indicateur de fuite provenant de n'importe quelle autre canalisation.

2.  Procédé selon la revendication 1, comprenant en outre le prélèvement d'échantillons en plusieurs points consécutifs en aval desdits premier et second points, pour déterminer la concentration desdits agents indicateurs de fuites.

3.  Procédé selon la revendication 1 ou 2, comprenant en outre le prélèvement d'un nombre d'échantillons à partir d'une canalisation entre deux points voisins d'échantillonnage dans ladite canalisation à l'aide d'un tuyau raccordé à une pompe, ledit tuyau étant déplacé dans la canalisation entre lesdits points adjacents d'échantillonnage, les échantillons étant prélevés en des points choisis à volonté dans ladite canalisation, lesdits points choisis à volonté étant déterminés à partir de marquages de mesure sur le tuyau ou sur une bande de mesure séparée.

4.  Procédé selon l'une quelconque des revendications précédentes, selon lequel la quantité d'eau ajoutée est en excès par rapport au débit normal dans la canalisation.